# EUROPEAN PATENT SPECIFICATION

(11) **EP 1 126 202 B1**
(45) Date of publication and mention of the grant of the patent: **22.09.2004**
(21) Application number: 01101988.2
(22) Date of filing: 30.01.2001
(51) Int. Cl.: F16K 1/30

(54) **Valve assembly for gas cylinder**
Ventilanordnung einer Gasflasche
Agencement de soupape d'une bouteille de gaz

(30) Priority: 18.02.2000 JP 2000040667
(43) Date of publication of application: 22.08.2001
(73) Proprietor: KABUSHIKI KAISHA NERIKI, Amagasaki-shi, Hyogo-ken (JP)
(72) Inventor: Tadeka, Masaru, c/o Kabushiki Kaisha Neriki, Amagasaki-shi, Hyogo (JP); Hirakami, Osamu, c/o Kabushiki Kaisha Neriki, Amagasaki-shi, Hyogo (JP); Maekawa, Shinji, c/o Kabushiki Kaisha Neriki, Amagasaki-shi, Hyogo (JP)
(74) Representative: Horton, Andrew Robert Grant

(56) References cited:
- EP-A- 0 275 242
- EP-A- 0 908 807
- GB-A- 821 696
- JP-A- 3 219 172
- US-A- 5 996 625

## Description

### BACKGROUND OF THE INVENTION

### Field of the Invention

The present invention relates to a valve assembly which is attached to a gas cylinder containing compressed gas or liquefied gas and is used for taking the gas out of the gas cylinder and charging it thereto. More specifically, it concerns a valve assembly with pressure reducing function, which makes it possible to take out high pressure gas within a gas cylinder as it is reduced to a desired low pressure when taking it out of the gas cylinder.

### Explanation of Related Art

A conventional example of the valve assembly with pressure reducing function of this type is disclosed in Patent No. 2,821,699 proposed earlier by an Assignee of the present invention.

The conventional valve assembly comprises a housing within which a gas inlet, a shut off valve, a pressure reducing valve, a first check valve for retaining residual pressure and a gas outlet are arranged in series in the mentioned order. There is provided a bypass passage in parallel with the pressure reducing valve between an outlet of the shut off valve and the first check valve. The bypass passage is provided with a second check valve which inhibits a flow from the outlet of the shut off valve to the gas outlet. The pressure reducing valve has a piston which moves for opening and closing by a balance between a spring force for valve opening and a downstream pressure for valve closing.

The conventional valve assembly is excellent in that it can take out gas within a gas cylinder as its pressure is reduced by the pressure reducing valve when taking it out of the gas cylinder and besides in that it charges gas into a gas cylinder within a short period of time since it can charge the charging gas supplied to the gas outlet during the gas charging, into the gas cylinder via the bypass passage having a small flow resistance and a gap produced when the shut off valve opens. However, the conventional technique still has to be improved on the following points.

In the case where gas to be taken out must have its pressure largely reduced in comparison with that of high pressure gas within a gas cylinder, it is required to increase a pressure receiving area of the piston of the pressure reducing valve so as to smoothly move the piston for valve closing. In consequence, the conventional technique enlarges a diameter of the piston to entail a problem of making the valve assembly large and very heavy.

Further, when charging gas, the shut off valve has to be opened. Therefore, it takes labor to effect the opening operation. Also on this point, the conventional technique must be improved.

US patent specification 5,996,625 describes a valve assembly for a gas cylinder having a housing including an inlet passage, a shut off valve, an outlet passage and a gas outlet between which a communication is provided in the mentioned order and further including a bypass passage and a charging port communicated with each other, the inlet passage and the bypass passage communicating with an interior space of the gas cylinder; a first pressure reducing valve, a second pressure reducing valve; a check valve provided in the bypass passage so as to inhibit a flow from the interior space of the gas cylinder to the charging port; a first handle for opening and closing the shut off valve and a second handle for adjusting a set pressure of the second pressure reducing valve and a first pressure gauge which communicates with the interior space of the gas cylinder.

UK patent specification 821,696 describes a two-stage pressure regulator valve for attachment to the opening and closing valve of a gas bottle. The two-stage valve has a piston valve serving to provide the first pressure reduction and in series with a diaphragm valve.

### SUMMARY OF THE INVENTION

The present invention has an object to provide a valve assembly with pressure reducing function which is compact and facilitates the charging work.

The invention is characterised in that a further check valve for retaining residual pressure provided in the outlet passage is arranged in series in the mentioned order from the shut off valve towards the gas outlet, and a second pressure gauge communicates with a downstream side of the second pressure reducing valve, and in that the first and second handles are arranged side by side in a horizontal direction, on an upper surface of the housing; the first and second pressure gauges are disposed side by side in a vertical direction on a front surface of the housing, and the gas outlet and charging port are positioned side by side in a vertical direction on one of the rear or side surfaces of the housing.

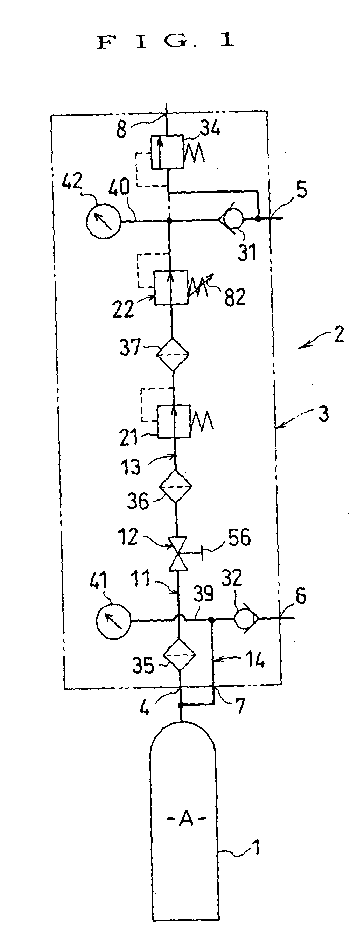

The present invention functions in the following manner, for example, as shown in Figs. 1 to 4.

When taking out gas, the shut-off valve 12 is opened. Then high pressure gas within the interior space (A) of the gas cylinder 1 is reduced to a predetermined middle pressure by the first pressure reducing valve 21 and subsequently is reduced to a desired low pressure by the second pressure reducing valve 22. Thereafter, the low pressure gas is taken out of the gas outlet 5 through the further check valve, hereinafter called the first check valve 31.

While taking out the gas, if reversely flowing gas invades the gas outlet 5 for any reason, the first check valve 31 inhibits the reverse flow to prevent an interior area of the gas cylinder 1 from being contaminated with the reversely flowing gas.

When the gas is continuously taken out until a residual pressure within the gas cylinder 1 lowers to a set pressure, a first check spring 90 automatically closes the first check valve 31. This prevents further gas take-out to retain the residual pressure within the gas cylinder 1 at the set pressure.

When charging high pressure gas into the evacuated gas cylinder 1, charging gas is supplied to the charging port 6 with the shut off valve 12 closed. Then the charging gas is charged into the gas cylinder 1 through the check valve 32 (hereinafter also called the second check valve) of the bypass passage 14.

Consequently, the present invention produces the following advantages.

The high pressure gas within the gas cylinder is reduced in multiple stages by a plurality of pressure reducing valves. This largely reduces a diameter of a pressure receiving member (piston, diaphragm and the like) of every pressure reducing valve when compared with a pressure reducing valve of single reduction type. This enables the plurality of pressure reducing valves to be readily installed in a redundant space within the housing, which results in preventing the projection of constituent members of these pressure reducing valves from the housing to thereby make the valve assembly compact and light. Additionally, the present invention can charge gas into the gas cylinder through the bypass passage, so that it does not have to open the shut off valve when charging the gas, differently from the conventional technique and therefore does not take trouble to charge the gas. The foregoing construction could provide a valve assembly with pressure reducing function which is compact and facilitates the charging work.

In the valve assembly, the first pressure reducing valve 21 is formed into a piston-type structure and the second pressure reducing valve 22 is constructed into a diaphragm-type structure. In this case, the first pressure reducing valve of the piston-type strongly reduces the pressure of the gas and thereafter the second pressure reducing valve reduces it with high accuracy. This can supply desired low pressure gas stably. It is a matter of course that the first pressure reducing valve of the piston-type and the second pressure reducing valve of the diaphragm-type can be formed into various structures, respectively.

In the valve assembly, a first handle 56 which opens and closes the shut off valve 12 and a second handle 82 which adjusts a set pressure of the second pressure reducing valve 22 are arranged side by side on an upper surface of the housing 3 in a horizontal direction. Further, a first pressure gauge 41 which communicates with the interior space (A) of the gas cylinder 1 and a second pressure gauge 42 which communicates with a downstream side of the second pressure reducing valve 22 are disposed side by side on a front surface of the housing 3 in a vertical direction. Moreover, the gas outlet 5 and the charging port 6 are positioned side by side in the vertical direction on any one of a rear surface and both side surfaces of the housing 3. In this case, the first and the second two handles can be operated from the same upper direction and besides the first and the second two pressure gauges can be confirmed with eyes from the same front direction. Further, a gas take-out mouthpiece and a gas charging mouthpiece can be connected to the two connection ports of the gas outlet and the charging port from the same direction, respectively. This enormously improves the operability and workability of the valve assembly. In addition, two mutually relating ones of the constituent instruments of the valve assembly are provided in the same direction. This facilitates the working of bores and threads for attaching these instruments to result in the possibility of manufacturing the valve assembly inexpensively.

In the valve assembly, when the gas outlet 5 is arranged upwards of the charging port 6 and the second pressure gauge 42 is disposed upwards of the first pressure gauge 41, it is possible to arrange at relatively high positions the gas outlet which is connected at a site where the gas cylinder is installed as well as the second pressure gauge which indicates a pressure of the gas to be taken out. This improves the working efficiency at the installation site.

In the valve assembly, if there is provided an orifice or the like flow resistance applying means 104 between the first check valve 31 and the gas outlet 5, it is possible to apply a predetermined flow resistance to gas having its pressure reduced to a desired low pressure by the second pressure reducing valve. This can control the flow amount of the gas to be taken out of the gas outlet substantially at a predetermined value.

### BRIEF DESCRIPTION OF THE DRAWINGS

Figs. 1 to 4 show an embodiment of the present invention;
Fig. 1 is a system diagram of a valve assembly;
Fig. 2 is a sectional view when the valve assembly is seen form a front side;
Fig. 3 is a sectional view when the valve assembly is seen from a right side and corresponds to a view when it is seen along a line III-III in Fig. 2 in a direction indicated by arrows;
Fig. 4 is a plan view of the valve assembly; and
Fig. 5 shows a modification of the present invention and is a partial enlarged view similar to Fig. 3.

### DESCRIPTION OF THE PREFERRED EMBODIMENTS

Hereafter, an embodiment of the present invention is explained with respect to Figs. 1 to 4.

First, explanation is given for outline of a valve assembly by resorting to a system diagram of Fig. 1.

The valve assembly 2 fixed to a gas cylinder 1 comprises a housing 3 which has an outer surface provided with a gas inlet 4, a gas outlet 5, a charging port 6, a discharging port 7 and a relief port 8. And an interior space (A) of the gas cylinder 1 communicates with the gas outlet 5 through the gas inlet 4, an inlet passage 11, a shut off valve 12 and an outlet passage 13 within the housing 3. The interior space (A) also communicates with the charging port 6 via the discharging port 7 and a bypass passage 14 within the housing 3.

The outlet passage 13 is provided with a first pressure reducing valve 21, a second pressure reducing valve 22 and a first check valve 31 for retaining residual pressure, in series in the mentioned order, from the shut off valve 12 toward the gas outlet 5. Further, the bypass passage 14 is provided with a second check valve 32 which inhibits a flow from the discharging port 7 to the charging port 6.

A downstream safety valve 34 is disposed between an outlet side of the first check valve 31 and the relief port 8. Besides, a first filter 35, a second filter 36 and a third filter 37 are attached to the respective inlet sides of the shut off valve 12, the first pressure reducing valve 21 and the second pressure reducing valve 22. In addition, the bypass passage 14 communicates with a first pressure gauge 41 via a first communication passage 39 and the second pressure reducing valve 22 has an outlet communicating with a second pressure gauge 42 via a second communication passage 40.

The valve assembly 2 is used in the following manner. The gas cylinder 1 is charged with high pressure gas having a pressure not less than the conventional charging pressure of [about 15 MPa (about 150 kgf/cm²)], for example, about 15 MPa to 30 MPa (about 150 kgf/cm² to 300 kgf/cm²).

When taking out the gas, a gas take-out mouthpiece (not shown) is connected to the gas outlet 5 and the shut off valve 12 is opened. Then the high pressure gas within the interior space (A) of the gas cylinder 1 is reduced to a predetermined middle pressure by the first pressure reducing valve 21 and subsequently is reduced to a desired low pressure by the second pressure reducing valve 22. Thereafter, the low pressure gas is taken out of the gas outlet 5 through the first check valve 31.

During the gas take-out, in the event that the gas outlet 5 has an abnormally high pressure because foreign matters have bitten the second pressure reducing valve 22 or the first check valve 31 or for the like reason, the abnormal pressure is relieved through the downstream safety valve 34.

Further, if reversely flowing gas invades the gas outlet 5 for any reason during the gas take-out, the first check vale 31 inhibits the reverse flow to prevent an interior area of the gas cylinder 1 from being contaminated with the reversely flowing gas.

When the gas is continuously taken out until a residual pressure within the gas cylinder 1 lowers to a set pressure, a check spring (not shown) automatically closes the first check valve 31. This prevents further gas take-out to retain the residual pressure within the gas cylinder 1 at the set pressure. As a result, it is possible to prevent the atmosphere from invading the interior area of the gas cylinder 1 even with the shut off valve 12 kept open by mistake.

When charging high pressure gas into the evacuated gas cylinder 1, a gas charging mouthpiece (not shown) is connected to the charging port 6 with the shut off valve 12 closed and the high pressure charging gas is supplied through the mouthpiece. Then the charging gas is charged into the gas cylinder 1 through the charging port 6, the second check valve 32 and the discharging port 7 in the mentioned order.

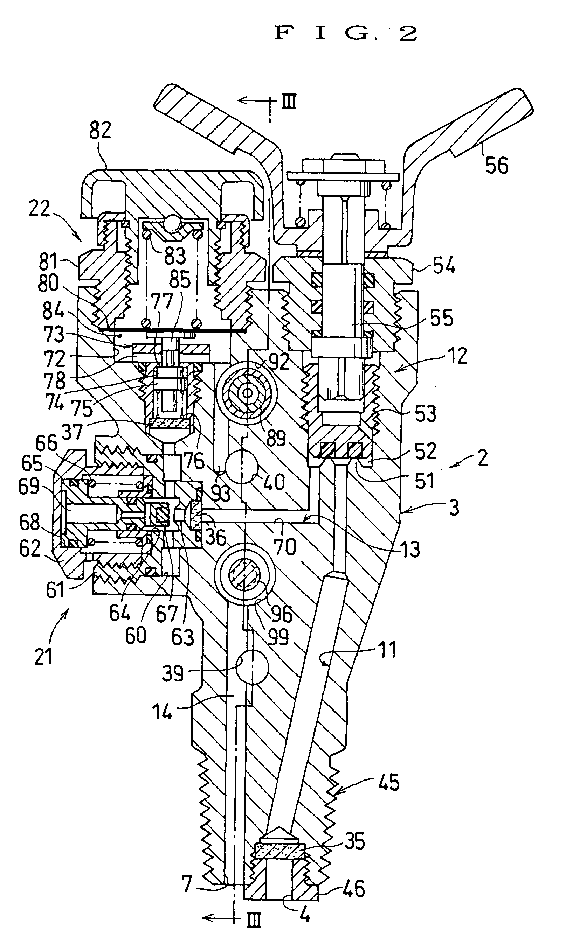

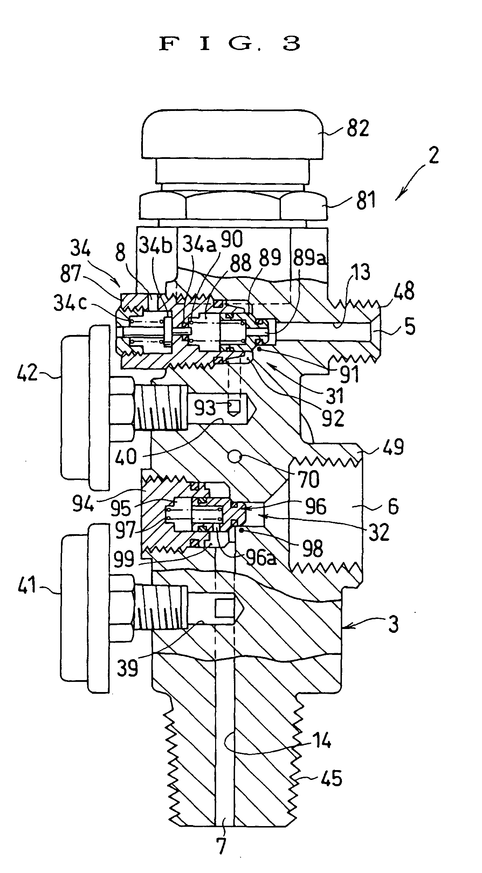

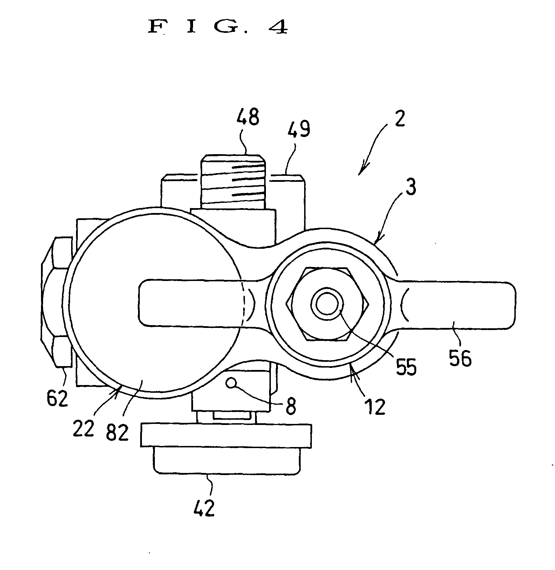

Next, a concrete structure of the valve assembly 2 is explained by relying on Figs. 2 to 4 with reference to the above-mentioned system diagram of Fig. 1. Fig. 2 is a sectional view when the valve assembly is seen from a front side. Fig. 3 is a sectional view when the valve assembly is seen from a right side and corresponds to a view when it is seen along a line III-III in Fig. 2 in a direction indicated by arrows. Fig. 4 is a plan view of the valve assembly.

A threaded leg 45 of the housing 3 has an under surface opened to provide the gas inlet 4 and the discharging port 7. The first filter 35 is pushed to a lower portion of the inlet passage 11 by an annular bolt 46. The housing 3 has a rear surface on which an outlet nozzle 48 provided with the gas outlet 5 and a charging nozzle 49 provided with the charging port 6 are arranged in a vertical direction.

The shut off valve 12 is provided at a right upper portion when the housing 3 is seen from the front side.

A shut off valve seat 51 is formed at an upper end of the inlet passage 11. Formed upwards of the shut off valve seat 51 is a vertically extending shut off valve chamber 52, with which a shut off member 53 engages in screw-thread fitting relationship. The shut off member 53 moves up and down with respect to the shut off valve seat 51. A spindle 55 is hermetically inserted into a first externally threaded closure 54. The spindle 55 has a lower portion fitted into the shut off member 53. The spindle 55 has an upper portion to which a first handle 56 of lever-type is attached.

The first pressure reducing valve 21 is formed into a cassette-type structure and is provided at a left portion of a halfway height position of the housing 3.

A cassette cylinder 61 is hermetically fitted into a first attaching bore 60 provided by opening a left surface of the housing 3, in screw-thread engagement. The cassette cylinder 61 has an inner peripheral surface into which a bottomed sleeve 62 is fitted in screw-thread engagement. The cassette cylinder 61 has a right end portion to which the second filter 36 is attached. Reference numeral 63 indicates a first pressure reducing valve seat and reference numeral 64 designates a first pressure reducing valve chamber.

A first opening spring 66 pushes leftwards a piston 65 hermetically inserted into the sleeve 62. The piston 65 has a right projection a front end of which is provided with a first pressure reducing member 67 and has a left side on which a first actuation chamber 68 is formed. The first actuation chamber 68 communicates with the first pressure reducing chamber 64 through a communication hole 69 within the piston 65.

And the first pressure reducing member 67 moves for opening and closing with respect to the first pressure reducing valve seat 63 by a balance between a leftward valve-opening force produced by the first opening spring 66 and a rightward valve-closing force which acts on the piston 65 from the first actuation chamber 68.

The second pressure reducing valve 22 is provided upwards of the first pressure reducing valve 21 and leftwards of the shut off valve 12.

A second attaching bore 72 is provided by opening an upper surface of the housing 3. A sleeve 73 is hermetically fitted into a radially reduced portion of the second attaching bore 72 in screw-thread engagement. A second pressure reducing member 75 is inserted into a second pressure reducing valve chamber 74 within the sleeve 73. The second pressure reducing member 75 is urged toward a second pressure reducing valve seat 77 by a closing spring 76. The sleeve 73 has a lower portion to which the third filter 37 is fixed and has an upper portion formed with a horizontal outlet groove 78.

A second externally threaded closure 81 hermetically fixes a diaphragm 80 composed of a resilient member such as rubber and synthetic resin, onto a peripheral wall of a radially increased portion of the second attaching bore 72. The second externally threaded closure 81 has inner threads with which a second columnar handle 82 engages in screw-thread fitting relationship vertically movably. A second opening spring 83 is attached between the second handle 82 and the diaphragm 80. A second actuation chamber 84 is formed downwards of the diaphragm 80. Further, the diaphragm 80 is connected to the second pressure reducing member 75 through a push rod 85.

And the second pressure reducing member 75 moves for opening and closing with respect to the second pressure reducing valve seat 77 by a balance between a downward valve-opening force of the second opening spring 83 adjusted by the second handle 82 and a valve-closing force which comprises an upward force acting on the diaphragm 80 from the second actuation chamber 84 and an urging force of the closing spring 76 added thereto.

The first check valve 31 for retaining residual pressure is provided between the second pressure reducing valve 22 and the shut off valve 12 substantially coaxially with the outlet nozzle 48.

A sleeve 87 is hermetically fitted into the housing 3 in screw-thread engagement from the front side. The sleeve 87 has within its innermost portion a first check valve chamber 88, into which a first cylindrical check member 89 is hermetically inserted. The first check member 89 is brought into contact with a first check valve seat 91 by a first check spring 90. The first check member 89 has an outer periphery formed with an annular inlet 92. The annular inlet 92 communicates with the second actuation chamber 84 through a vertical passage 93.

The first check valve chamber 88 has a bottom wall provided with a valve seat 34a of the downstream safety valve 34. A safety member 34b is brought into closing contact with the valve seat 34a by a spring 34c. The relief port 8 is opened upwards.

The second check valve 32 is provided downwards of the first check valve 31 and substantially coaxially with the charging nozzle 49.

A cap 94 is hermetically fitted into the housing 3 from the front side in screw-thread engagement. A second check member 96 is inserted into a second check valve chamber 95 within the cap 94. The second check member 96 is brought into closing contact with a second check valve seat 98 by a second check spring 97.

The second check valve chamber 95 communicates with the bypass passage 14 via a through hole 96a of the second check member 96 and an annular outlet 99.

The first communication passage 39 branched from the bypass passage 14 is opened at a lower side portion of a front surface of the housing 3. The first pressure gauge 41 is fitted into such opening portion in screw-thread engagement. The second communication passage 40 branched from the vertical passage 93 is opened at an upper side portion of the front surface of the housing 3. The second pressure gauge 42 is fitted into that opening portion in screw-thread engagement.

Although this embodiment adopts those of Bourdon-tube type for the first pressure gauge 41 and the second pressure gauge 42, pressure indicating means of other kinds may be employed.

The valve assembly 2 operates as follows.

When taking gas out of the gas cylinder 1, a gas take-out mouthpiece (not shown) is connected to the outlet nozzle 48 and the shut off member 53 of the shut off valve 12 is opened by the first handle 56.

Then the gas within the gas cylinder 1 flows out to the first pressure reducing valve chamber 64 through the gas inlet 4, the first filter 35, the shut off valve seat 51, the shut off valve chamber 52, a communication passage 70, the second filter 36, and a gap produced when the first pressure reducing member 67 moves for opening with respect to the first pressure reducing valve seat 63. Next, it flows out to the annular inlet 92 through the third filter 37, the second pressure reducing valve chamber 74, a gap produced when the second pressure reducing member 75 moves for opening with respect to the second pressure reducing valve seat 77, the outlet groove 78, and the vertical passage 93. Subsequently, the flowed-out gas separates the first check member 89 from the first check valve seat 91 against the first check spring 90 with its pressure and thereafter is taken out of the gas take-out mouthpiece (not shown) through the gas outlet 5.

In the case where an interior area of the gas outlet 5 has an abnormally high pressure for any reason, the gas of the abnormal pressure flows into the first check valve chamber 88 via a through hole 89a of the first check member 89. The flowed-in gas separates the safety member 34b from the valve seat 34a with its pressure.

In the gas take-out state, the second check member 96 is brought into closing contact with the second check valve seat 98 by a force resultant from an inner pressure of the second check valve chamber 95 and an urging force of the second check spring 97. During the gas take-out, when reversely flowing gas has entered the gas outlet 5 for any reasons, it flows into the first check valve chamber 88 via the through hole 89a of the first check member 89. This reversely flowing gas brings the first check member 89 into closing contact with the first check valve seat 91 with its pressure.

When the gas is continuously taken out until the gas cylinder 1 has a residual pressure lowered to a set pressure, a valve-closing force of the first check spring 90 overcomes a valve-opening force produced by a gas pressure of the annular inlet 92 to bring the first check member 89 into closing contact with the first check valve seat 91. This enables the interior area of the gas cylinder 1 to keep its set residual pressure.

When charging high pressure gas into the evacuated gas cylinder 1, the gas charging mouthpiece (not shown) is connected to the charging nozzle 49. The high pressure gas is supplied to the charging port 6 through the gas charging mouthpiece with the shut off valve 12 closed. Then the high pressure gas separates the second check member 96 from the second check valve seat 98 and thereafter is charged into the gas cylinder 1 through the discharging port 7.

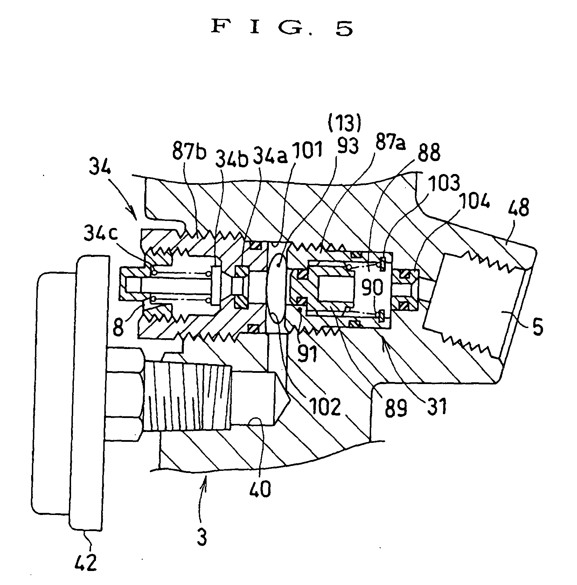

Fig. 5 shows a modification of the present invention and is a partial enlarged view similar to Fig. 3. The modification shown in Fig. 5 has the same or similar constituent members as those of the embodiment shown in Fig. 3, which are indicated by the same numerals, and is different therefrom on the following points.

The housing 3 is formed with a horizontal bore 101 having an inner portion (a right portion) into which a first sleeve 87a is fitted in screw-thread engagement. The first check valve 31 is attached to the first sleeve 87a. The horizontal bore 101 has an opening portion (a left portion) into which a second sleeve 87b is fitted in screw-thread engagement. The downstream safety valve 34 is attached to the second sleeve 87b. The horizontal bore 101 has a horizontal mid portion crossing the vertical passage 93 between the two sleeves 87a and 87b. Reference numeral 102 designates an opening at the crossing portion. More specifically, the downstream safety valve 34 communicates with an inlet of the first check valve 31 (see one-dot chain line in Fig. 1) instead of the outlet thereof.

The first check valve 31 has the first check valve seat 91 and the first check valve chamber 88 arranged in the mentioned order from an upstream side. The first check member 89 is inserted into the first check valve chamber 88. The first check valve 31 functions substantially in the same manner as the above mentioned embodiment. In this modification, the first check spring 90 composed of a compression coil spring has a right end received by a right end portion of the first sleeve 87a through a snap ring 103. Instead, the coiled portion of the first check spring 90 may have its right portion fitted into the right end portion of the first sleeve 87a in screw-thread engagement.

The downstream safety valve 34 is constructed substantially in the same manner as in the above-mentioned embodiment except that the relief port 8 is opened toward the front surface.

Further, the outlet nozzle 48 projects obliquely and downwardly. The gas outlet 5 within the outlet nozzle 48 is opened obliquely and downwardly. The gas outlet 5 is inclined with respect to a horizontal plane by an angle, which is set to about 15 degrees here. This can prevent the angular bending of a hose portion (not shown) of the gas take-out mouthpiece connected to the gas outlet 5 to result in elongating the lifetime of the hose portion. The inclination angle of the gas outlet 5 preferably has a value falling within a range of about 10 degrees to about 30 degrees and more preferably has a value falling within a range of about 10 degrees to about 20 degrees.

Besides, a flow resistance applying means 104 which comprises an orifice is provided at a terminal portion of the outlet passage 13 between the first check valve 31 and the gas outlet 5. The flow resistance applying means 104 applies a flow resistance to the gas which passes through the terminal portion of the outlet passage 13, thereby making it possible to control the flow amount of the gas to be taken out of the gas outlet 5 substantially at a predetermined value.

The above-mentioned embodiment and modification can be further modified as follows.

Both of the inlet passage 11 and the bypass passage 14 communicate with the interior space (A) of the gas cylinder 1 outside the housing 3. Instead, both of them may communicate with each other inside the housing 3 and only the gas inlet 4 or the discharging port 7 may communicate with the interior space (A).

Each of the shut off valve 12, the first pressure reducing valve 21, the second pressure reducing valve 22, the first check valve 31, the second check valve 32 and the downstream safety valve 34 may have a structure different from the exemplified one.

The first handle 56 of the shut off valve 12 may be of other kinds such as a single lever and a cup-like one, instead of the exemplified structure.

The second handle 82 of the second pressure reducing valve 22 may be of other kinds such as a lever-type one, instead of the exemplified structure.

## Claims

1. A valve assembly for a gas cylinder comprising:
a housing (3) including an inlet passage (11), a shut off valve (12), an outlet passage (13) and a gas outlet (5) between which a communication is provided in the mentioned order and further including a bypass passage (14) and a charging port (6) communicated with each other, the inlet passage (11) and the bypass passage (14) communicating with an interior space (A) of the gas cylinder (1);
a first pressure reducing valve (21), a second pressure reducing valve (22);
a check valve (32) provided in the bypass passage (14) so as to inhibit a flow from the interior space (A) of the gas cylinder (1) to the charging port (6);
a first handle (56) for opening and closing the shut off valve (12) and a second handle (82) for adjusting a set pressure of the second pressure reducing valve (22);
a first pressure gauge (41) which communicates with the interior space (A) of the gas cylinder (1);
**characterised in that**:
a further check valve (31) for retaining residual pressure provided in the outlet passage (13) is arranged in series in the mentioned order from the shut off valve (12) towards the gas outlet (5), and
a second pressure gauge (42) communicates with a downstream side of the second pressure reducing valve (22),
and **in that**:
the first and second handles (56, 82) are arranged side by side in a horizontal direction, on an upper surface of the housing (3);
the first and second pressure gauges (41, 42) are disposed side by side in a vertical direction on a front surface of the housing (3), and
the gas outlet (5) and charging port (6) are positioned side by side in a vertical direction on one of the rear or side surfaces of the housing (3).

2. A valve assembly for a gas cylinder according to claim 1 in which the first pressure reducing valve (21) is formed as a piston-type structure and the second pressure reducing valve (22) is constructed as a diaphragm-type structure.

3. A valve assembly for a gas cylinder according to claim 2 in which the first pressure reducing valve (21) of the piston-type comprises a first pressure reducing valve seat (63), a first pressure reducing member (67) which moves for opening and closing with respect to the first pressure reducing valve seat (63), a piston (65) connected to the first pressure reducing member (67), a first opening spring (66) which separates the first pressure reducing member (67) from the first pressure reducing valve seat (63), and a first actuation chamber (68) which actuates a pressure on the piston (65) to bring the first pressure reducing member (67) near the first pressure reducing valve seat (63), and
the second pressure reducing valve (22) of the diaphragm-type comprises a second pressure reducing valve seat (77), a second pressure reducing member (75) which moves for opening and closing with respect to the second pressure reducing valve seat (77), a diaphragm (80) connected to the second pressure reducing member (75), a second opening spring (83) which separates the second pressure reducing member (75) from the second pressure reducing valve seat (77), and a second actuation chamber (84) which actuates a pressure on the diaphragm (80), thereby allowing the second pressure reducing member (75) to approach the second pressure reducing valve seat (77).

4. A valve assembly for a gas cylinder according to any one of claims 1 to 3, wherein the gas outlet (5) is arranged upwards of the charging port (6) and the second pressure gauge (42) is disposed upwards of the first pressure gauge (41).

5. A valve assembly for a gas cylinder according to claim 4, wherein the housing (3) arranges an outlet nozzle (48) provided with the gas outlet (5) and a charging nozzle (49) provided with the charging port (6),
the outlet nozzle (48) projecting from the housing (3) obliquely and downwardly being opened to provide the gas outlet (5) obliquely and downwardly.

6. A valve assembly for a gas cylinder according to any preceding claim in which a flow resistance applying means (104) is provided between the first check valve (31) and the gas outlet (5).

## Patentansprüche

1. Ventilanordnung für eine Gasflasche mit:
einem Gehäuse (3) mit einem Einlassdurchgang (11), einem Absperrventil (12), einem Auslassdurchgang (13) und einem Gasauslass (5), zwischen denen eine Verbindung in der erwähnten Reihenfolge vorgesehen ist, und ferner mit einem Umleitdurchgang (14) und einem Füllkanal (6), die miteinander in Verbindung stehen, wobei der Einlassdurchgang (11) und der Umleitdurchgang (14) mit einem Innenraum (A) der Gasflasche (1) in Verbindung stehen;
einem ersten Druckverringerungsventil (21), einem zweiten Druckverringerungsventil (22);
einem Rückschlagventil (32), das im Umleitdurchgang (14) vorgesehen ist, um eine Strömung vom Innenraum (A) der Gasflasche (1) zum Füllkanal (6) zu verhindern;
einem ersten Griff (56) zum Öffnen und Schließen des Absperrventils (12) und einem zweiten Griff (82) zum Einstellen eines Solldrucks des zweiten Druckverringerungsventils (22);
einem ersten Druckmesser (41), der mit dem Innenraum (A) der Gasflasche (1) in Verbindung steht;
**dadurch gekennzeichnet, dass**:
ein weiteres Rückschlagventil (31) zum Aufrechterhalten eines Restdrucks, das im Auslassdurchgang (13) vorgesehen ist, in der erwähnten Reihenfolge vom Absperrventil (12) zum Gasauslass (5) hin in Reihe angeordnet ist, und
ein zweiter Druckmesser (42) mit einer Stromabwärtsseite des zweiten Druckverringerungsventils (22) in Verbindung steht,
und dass:
der erste und der zweite Griff (56, 82) nebeneinander in einer horizontalen Richtung an einer oberen Oberfläche des Gehäuses (3) angeordnet sind;
der erste und der zweite Druckmesser (41, 42) nebeneinander in einer vertikalen Richtung an einer Vorderfläche des Gehäuses (3) angeordnet sind, und
der Gasauslass (5) und der Füllkanal (6) nebeneinander in einer vertikalen Richtung an einer der hinteren oder Seitenflächen des Gehäuses (3) angeordnet sind.

2. Ventilanordnung für eine Gasflasche nach Anspruch 1, wobei das erste Druckverringerungsventil (21) in Kolbentyp-Bauart ausgebildet ist und das zweite Druckverringerungsventil (22) in Membrantyp-Bauart konstruiert ist.

3. Ventilanordnung für eine Gasflasche nach Anspruch 2, wobei das erste Druckverringerungsventil (21) vom Kolbentyp einen ersten Druckverringerungsventilsitz (63), ein erstes Druckverringerungselement (67), das sich zum Öffnen und Schließen bezüglich des ersten Druckverringerungsventilsitzes (63) bewegt, einen Kolben (65), der mit dem ersten Druckverringerungselement (67) verbunden ist, eine erste Öffnungsfeder (66), die das erste Druckverringerungselement (67) vom ersten Druckverringerungsventilsitz (63) trennt, und eine erste Betätigungskammer (68), die einen Druck auf den Kolben (65) steuert, um das erste Druckverringerungselement (67) in die Nähe des ersten Druckverringerungsventilsitzes (63) zu bringen, umfasst, und
das zweite Druckverringerungsventil (22) vom Membrantyp einen zweiten Druckverringerungsventilsitz (77), ein zweites Druckverringerungselement (75), das sich zum Öffnen und Schließen bezüglich des zweiten Druckverringerungsventilsitzes (77) bewegt, eine Membran (80), die mit dem zweiten Druckverringerungselement (75) verbunden ist, eine zweite Öffnungsfeder (83), die das zweite Druckverringerungselement (75) vom zweiten Druckverringerungsventilsitz (77) trennt, und eine zweite Betätigungskammer (84), die einen Druck auf die Membran (80) steuert, wodurch ermöglicht wird, dass sich das zweite Druckverringerungselement (75) dem zweiten Druckverringerungsventilsitz (77) nähert, umfasst.

4. Ventilanordnung für eine Gasflasche nach einem der Ansprüche 1 bis 3, wobei der Gasauslass (5) aufwärts vom Füllkanal (6) angeordnet ist und der zweite Druckmesser (42) aufwärts vom ersten Druckmesser (41) angeordnet ist.

5. Ventilanordnung für eine Gasflasche nach Anspruch 4, wobei das Gehäuse (3) eine Auslassdüse (48), die mit dem Gasauslass (5) versehen ist, und eine Fülldüse (49), die mit dem Füllkanal (6) versehen ist, festlegt,
wobei die Auslassdüse (48) vom Gehäuse (3) schräg und nach unten vorsteht und so geöffnet ist, dass sie den Gasauslass (5) schräg und nach unten vorsieht.

6. Ventilanordnung für eine Gasflasche nach einem vorangehenden Anspruch, wobei ein Strömungswiderstands-Aufbringmittel (104) zwischen dem ersten Rückschlagventil (31) und dem Gasauslass (5) vorgesehen ist.

## Revendications

1. Ensemble de vanne destiné à une bouteille de gaz, comportant :
un boîtier (3) comportant un passage d'admission (11), une vanne d'arrêt (12), un passage de sortie (13) et une sortie de gaz (5) entre lesquels une communication est fournie dans l'ordre mentionné, et comportant en outre un passage de dérivation (14) et un orifice de chargement (6) mis en communication l'un avec l'autre, le passage d'admission (11) et le passage de dérivation (14) communiquant avec un espace intérieur (A) de la bouteille de gaz (1),
une première vanne de réduction de pression (21), une seconde vanne de réduction de pression (22),
un clapet anti-retour (32) agencé dans le passage de dérivation (14) pour empêcher un écoulement à partir de l'espace intérieur (A) de la bouteille de gaz (1) vers l'orifice de chargement (6),
une première poignée (56) pour ouvrir et fermer la vanne d'arrêt (12), et une seconde poignée (82) pour ajuster une pression établie de la seconde vanne de réduction de pression (22),
un premier dynamomètre (41) qui communique avec l'espace intérieur (A) de la bouteille de gaz (1),
**caractérisé en ce que**
un clapet anti-retour supplémentaire (31) destiné à retenir une pression résiduelle fourni dans le passage de sortie (13) est agencé en série dans l'ordre mentionné à partir de la vanne d'arrêt (12) vers la sortie de gaz (5), et
un second dynamomètre (42) communique avec un côté aval de la seconde vanne de réduction de pression (22),
et **en ce que**
les première et seconde poignées (56, 52) sont agencées côte à côte dans une direction horizontale, sur une surface supérieure du boîtier (3),
les premier et second dynamomètres (41, 42) sont disposés côte à côte dans une direction verticale sur une surface avant du boîtier (3), et
la sortie de gaz (5) et l'orifice de chargement (6) sont positionnés côte à côte dans une direction verticale sur une surface parmi les surfaces arrière ou latérales du boîtier (3).

2. Ensemble de vanne destiné à une bouteille de gaz selon la revendication 1, dans lequel la première vanne de réduction de pression (21) est formée sous la forme d'une structure de type piston, et la seconde vanne de réduction de pression (22) est construite sous la forme d'une structure de type membrane.

3. Ensemble de vanne destiné à une bouteille de gaz selon la revendication 2, dans lequel la première vanne de réduction de pression (21) du type piston comporte un premier siège de vanne de réduction de pression (63), un premier élément de réduction de pression (67) qui se déplace pour ouverture et fermeture par rapport au premier siège de vanne de réduction de pression (63), un piston (65) connecté au premier élément de réduction de pression (67), un premier ressort d'ouverture (66) qui sépare le premier élément de réduction de pression (67) du premier siège de vanne de réduction de pression (63), et une première chambre d'actionnement (68) qui exerce une pression sur le piston (65) pour amener le premier élément de réduction de pression (67) à proximité du premier siège de vanne de réduction de pression (63), et
la seconde vanne de réduction de pression (22) du type membrane comporte un second siège de vanne de réduction de pression (77), un second élément de réduction de pression (75) qui se déplace pour ouverture et fermeture par rapport au second siège de vanne de réduction de pression (77), une membrane (80) connectée au second élément de réduction de pression (75), un second ressort d'ouverture (83) qui sépare le second élément de réduction de pression (75) du second siège de vanne de réduction de pression (77), et une seconde chambre d'actionnement (84) qui actionne une pression sur la membrane (80), en permettant ainsi au second élément de réduction de pression (75) d'approcher le second siège de vanne de réduction de pression (77).

4. Ensemble de vanne destiné à une bouteille de gaz selon l'une quelconque des revendications 1 à 3, dans lequel la sortie de gaz (5) est agencée en haut de l'orifice de chargement (6), et le second dynamomètre (42) est disposé en haut du premier dynamomètre (41).

5. Ensemble de vanne destiné à une bouteille de gaz selon la revendication 4, dans lequel le boîtier (3) agence une buse de sortie (48) munie de la sortie de gaz (5) et une buse de chargement (49) munie de l'orifice de chargement (6),
la buse de sortie (48), faisant saillie à partir du boîtier (3) en oblique et vers le bas, étant ouverte pour fournir la sortie de gaz (5) en oblique et vers le bas.

6. Ensemble de vanne destiné à une bouteille de gaz selon l'une quelconque des revendication précédentes, dans lequel des moyens d'application d'une résistance à l'écoulement (104) sont agencés entre le premier clapet anti-retour (31) et la sortie de gaz (5).
